# EUROPEAN PATENT SPECIFICATION

(11) **EP 1 048 157 B1**
(45) Date of publication and mention of the grant of the patent: **06.05.2004**
(21) Application number: 99906154.2
(22) Date of filing: 14.01.1999
(51) Int. Cl.: H04L 29/06

(54) **METHOD FOR TRANSFERRING DATA FROM A HEAD-END TO A NUMBER OF RECEIVERS**
VORRICHTUNG ZUR DATENÜBERTRAGUNG ZWISCHEN EINER KOPFSTATION UND MEHREREN EMPFÄNGERN
PROCEDE PERMETTANT DE TRANSFERER DES DONNES D'UNE TETE DE RESEAU A UN CERTAIN NOMBRE DE RECEPTEURS

(30) Priority: 14.01.1998 EP 98200081
(43) Date of publication of application: 02.11.2000
(73) Proprietor: Irdeto Access B.V., 2132 HD Hoofddorp (NL)
(72) Inventor: WAJS, Andrew, Augustine, NL-2023 AA Haarlem (NL)
(74) Representative: de Vries, Johannes Hendrik Fokke
(86) International application number: PCT/EP1999/000283
(87) International publication number: WO 1999/037069

(56) References cited:
- EP-A- 0 808 048
- US-A- 5 392 353
- US-A- 5 432 850
- STALLINGS W: "INTERNET ARMOR" BYTE, vol. 21, no. 12, December 1996, page 127/128, 130, 132, 134 XP000641459

## Description

The present invention relates to a method for transferring data from a head-end to a number of receivers by means of a digital broadcast signal, each of said receivers including a descrambler for descrambling a received digital transport stream.

The use of a digital broadcast signal, such as a DVB signal, for transferring data to one or more receivers shows the advantage that available receivers with descramblers can be used to transfer the data from a head-end to the receiver. However, such a method would normally not allow for a data transfer in a secure and private manner as the data is accessible to all receivers listening to the digital transport stream.

US-A-5 392 353 relates to an interactive satellite broadcast network, wherein encrypted communications ensure privacy of communications point-to-point in a network of interactive video stations interconnected by a broadcast network. Personal identification keys are used known only by the individual participating stations and a secure single central switching control center. The network control center intercepts communications encrypted as a function of the senders personal identification key and relays incoming communications designating the receiver in encrypted format as a function of the receivers personal identification key.

US-A-5 432 850 relates to a method and apparatus for secure data transmission, wherein a plurality of data frames are transmitted, each containing at least an encrypted data sequence employing the destination address as at least part of a decryption key. At the receiver side, the encrypted data sequence is decrypted by employing the local address of the receiver as at least part of the decryption key. In this known system each station can operate as a transmitting station using both the destination address and source address to encrypt the data.

EP-A-0 808 048 relates to a multimedia information service access, wherein a client can establish a connection with a server where desired multimedia information is resident. By selecting the desired multimedia information and providing a client information identifying the location of the user, the multimedia information is delivered by the server to a bridging apparatus through a switched network. It is indicated that the delivery of the multimedia information can be secured by comparing the client information to a segmented list to determine whether the client is authorized to receive the requested multimedia information.

The article "Internet Armor" by W. Stallings, Byte, vol. 21, no. 12, December 1996, page 127-134, describes a method to provide secure IP package by encrypting the IP packet and providing a new IP header with the destination address. This document however relates to transfer data through the Internet.

The present invention aims to provide a method of the above-mentioned type wherein privacy and security of the data transfer can be provided to each receiver.

According to the invention a method of the above-mentioned type is provided, including sending a message from the head-end to each receiver to which data needs to be transferred, said message including a key unique to the respective receiver, loading the unique key in the descrambler of the respective receiver, providing a table of unique keys with corresponding addresses of the respective receivers at the head-end, providing data packets with an individual address of at least one of said receivers, inserting said data packets into transport packets of a digital transport stream, selecting a key from said table in accordance with the address of the data packets, scrambling said transport packets using the selected key, broadcasting the digital transport stream, receiving the digital transport stream at one or more receivers and descrambling the scrambled transport packets of the digital transport stream only at the receiver having the unique key used to scramble the scrambled transport packets.

In this manner a method is obtained wherein each receiver attempting to descramble the broadcast signal will fail to descramble the signal accept for the receiver(s) having the unique key(s) used to scramble the transport packets in which the data packets are inserted which are intended to be received by this receiver. This results in the desired privacy and security for the data transfer between the head-end and the receiver.

In a preferred embodiment for transferring data packets to two or more receivers, the data packets for different receivers are inserted into different transport packets, each of said transport packets being scrambled with a unique key corresponding with the individual address of the corresponding data packets.

In this manner data transfer with privacy and security is provided for a number of receivers requesting the transfer of data.

The invention will be further explained by reference to the drawings in which an embodiment of the invention is schematically shown.

In this preferred embodiment the method is used to transfer data requested by a receiver from the Internet to the receiver on a digital broadcast signal or digital transport stream, so that an Internet connection is obtained with a high speed transfer of data to the receiver according to the Internet Protocol. However the method described can also be used to transfer data to receivers at their request or initiated by the head-end in another manner.

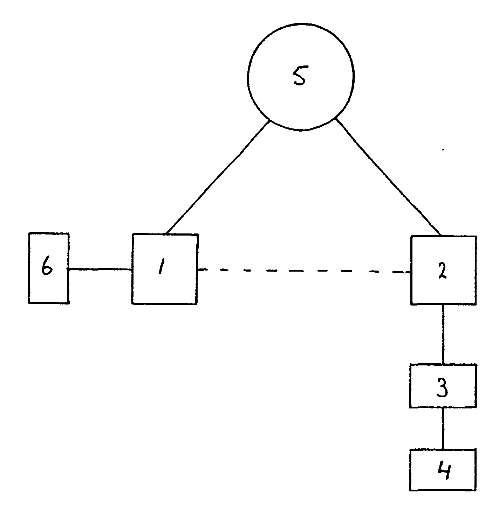

In the drawing a DVB system is very schematically shown by way of example, the system comprising head-end equipment 1 which will be indicated hereinafter by head-end, and a large number of subscribers having a receiver 2, only one of which is shown in the drawing. The receiver 2 includes a descrambler 3 co-operating with a smart card 4 in a usual manner. The descrambler 3 is used to descramble DVB services requiring a subscription. The receiver 2 is connected to the Internet 5 in a manner not further shown, for example by a well-known modem. If the receiver 2 requests the download of data, the data will be transferred to the receiver 2 via the head-end 1 by means of a broadcast signal in the following manner.

According to the internet protocol the data includes an IP or MAC address of the receiver 2 requesting the data to be transferred to this receiver. Each receiver 2 for which the head-end 1 receives data packets with an individual address, i.e. the IP or MAC address, is sent a so-called Entitlement Control Message or ECM with a control word or key which is unique to the receiver 2. This message is encrypted using an individual key which is stored in the smart card 4. At the head-end 1 the unique keys with the corresponding individual addresses are stored in a table 6. At the receiver(s) 2 to which an ECM is sent, the smart card 4 decrypts the received message using its individual key to obtain the unique key. The decrypted key is loaded into the descrambler 3 for future use.

At the head-end 1, the data packets for a specific receiver 2 requesting the transfer of data, are inserted into transport packets of the digital transport stream. Generally, the data packets are larger than the transport stream packets, so that the data packets are split and thereafter inserted into a number of transport stream packets. Before scrambling the transport stream packets containing the data packets, the head-end checks the IP or MAC address and selects the corresponding unique key from the table 6, which key is used to scramble the transport stream packets.

Each receiver 2 listening to the digital broadcast signal attempts to descramble the transport stream packets of the digital transport stream, wherein however only at the receiver 2 having the unique key used for scrambling the transport stream packets, the descrambling process will be successful. In this manner only one receiver 2 will descramble the scrambled transport stream packets to thereby obtain the IP data packets.

From the above it will be clear that the described method results in a transfer of data with privacy and security for each receiver 2 requesting a data transfer. Moreover, this transfer with privacy and security is achieved while using existing DVB or MPEG scrambling and descrambling equipment.

Generally, a number of receivers 2 will request the transfer of data. This is no problem as the head-end 1 will provide a table 6 including key/address combinations for each receiver 2 requesting a data transfer. The capacity of a digital broadcast signal is sufficient to transfer IP data packets to a large number of receivers 2. As the IP data packets for each particular receiver will be inserted into a number of transport packets wherein only these transport packets are scrambled using the unique key for this particular receiver, data transfer will still take place in a private and secure manner.

The data packets can be inserted into transport stream packets of a digital transport stream which is used for the transfer of data only. As an alternative the data packets can be inserted into transport stream packets of a DVB transport stream as the capacity of such a transport stream is far more than necessary for transferring the video information.

Although in the preferred embodiment the method is used to transfer IP data packets, the described method can 5 also be used to transfer data from other sources than the Internet. Further, it is noted that instead of an ECM another type of message may be used to transfer a unique key to a receiver.

## Claims

1. Method for transferring data from a head-end (1) to a number of receivers (2) by means of a broadcast signal, each of said receivers (2) including a descrambler for descrambling a received digital transport stream, said method including loading key unique to the respective receiver (2) in the descrambler (3) of the respective receiver (2), providing a table (6) of unique keys with corresponding addresses of the respective receivers (2) at the head-end (1), inserting said data into transport packets of a digital transport stream, selecting a key from said table, scrambling said transport packets using the selected key, broadcasting the digital transport stream, receiving the digital transport stream at one or more receivers (2) and descrambling the scrambled transport packets of the digital transport stream only at the receiver (2) having the unique key used to scramble the scrambled transport packets, **characterised in that** the method includes sending a message from the head-end (1) to each receiver (2) to which data needs to be transferred, said message including a key unique to the respective receiver (2), and **in that** the method includes providing data packets with an individual address of at least one of said receivers (2) to the head-end (1), wherein a key is selected from the table (6) of unique keys at the head-end (1) in accordance with the address of the data packets, and the data packets are inserted into said transport packets of the digital transport stream before scrambling.

2. Method according to claim 1, wherein for transferring data packets to two or more receivers (2), the data packets for different receivers (2) are inserted into different transport packets, each of said transport packets being scrambled with a unique key corresponding with the individual address of the corresponding data packets.

3. Method according to claim 1 or 2, wherein each receiver (2) is adapted to request the transfer of specific data from the head-end (1).

4. Method according to claim 1, 2 or 3, wherein the head-end (1) and the receivers (2) are connected to a network (5), for example the internet, wherein one or more receivers (2) request the transfer of data from the network (5), wherein the requested data together with the address of the requesting receiver(s) is provided to the head-end (1) in the form of data packets and the head-end (1) transfers the data packets to said one or more receivers (2) inserted in transport packets of the digital broadcast stream.

5. Method according to any one of the preceding claims, wherein the digital transport stream is a DVB transport stream.

6. Method according to any one of the preceding claims, wherein each receiver (2) listening to the digital broadcast signal attempts to descramble the transport stream packets of the digital transport stream.

## Patentansprüche

1. Verfahren zum Übertragen von Daten von einer Kopfstelle (1) zu einer Anzahl von Empfängern (2) mittels eines Rundfunksignals, wobei jeder der Empfänger (2) einen Descrambler zum Descrambeln eines empfangenen digitalen Transport-Streams enthält, und das Verfahren das Laden eines Schlüssels, der eindeutig für den jeweiligen Empfänger (2) bestimmt ist, in dem Descrambler (3) des entsprechenden Empfängers (2), das Bereitstellen einer Tabelle (6) eindeutig bestimmter Schlüssel mit entsprechenden Adressen der jeweiligen Empfänger (2) an der Kopfstelle (1), das Einfügen der Daten in Transport-Pakete eines digitalen Transport-Streams, das Auswählen eines Schlüssels aus der Tabelle, das Scrambeln der Transport-Pakete unter Verwendung des ausgewählten Schlüssels, das Rundsenden des digitalen Transport-Streams, das Empfangen des digitalen Transport-Streams an einem oder mehreren Empfängern (2) und das Descrambeln der gescrambelten Transport-Pakete des digitalen Transport-Streams nur an dem Empfänger (2) mit dem eindeutig bestimmten Schlüssel, der zum Scrambeln der gescrambelten Transport-Pakete verwendet wird, einschließt, **dadurch gekennzeichnet, dass** das Verfahren das Senden einer Mitteilung von der Kopfstelle (1) an jeden Empfänger (2), zu dem Daten übertragen werden müssen, einschließt, wobei die Mitteilung einen Schlüssel enthält, der eindeutig für den jeweiligen Empfänger (2) bestimmt ist, und dadurch, dass das Verfahren das Bereitstellen von Daten-Paketen mit einer individuellen Adresse wenigstens eines der Empfänger (2) für die Kopfstelle (1) einschließt, wobei ein Schlüssel aus der Tabelle (6) eindeutig bestimmter Schlüssel an der Kopfstelle (1) entsprechend den Adressen der Daten-Pakete ausgewählt wird und die Daten-Pakete vor dem Scrambeln in die Transport-Pakete des digitalen Transport-Streams eingefügt werden.

2. Verfahren nach Anspruch 1, wobei zum Übertragen von Daten-Paketen zu zwei oder mehr Empfängern (2) die Daten-Pakete für verschiedene Empfänger (2) in verschiedene Transport-Pakete eingefügt werden und jedes der Transport-Pakete mit einem eindeutig bestimmten Schlüssel, der der individuellen Adresse der entsprechenden Daten-Pakete entspricht, gescrambelt wird.

3. Verfahren nach Anspruch 1 oder 2, wobei jeder Empfänger (2) so eingerichtet ist, dass er die Übertragung spezieller Daten von der Kopfstelle (1) anfordert.

4. Verfahren nach Anspruch 1, 2 oder 3, wobei die Kopfstelle (1) und die Empfänger (2) mit einem Netz (5), beispielsweise dem Internet, verbunden sind und wobei ein oder mehrere Empfänger (2) die Übertragung von Daten aus dem Netz (5) anfordern und die angeforderten Daten zusammen mit der Adresse der/des anfordernden Empfänger/s der Kopfstelle (1) in Form von Daten-Paketen bereitgestellt werden und die Kopfstelle (1) die Daten-Pakete zu dem einen oder den mehreren Empfängern (2) in Transport-Pakete des digitalen Rundfunk-Streams eingefügt überträgt.

5. Verfahren nach einem der vorangehenden Ansprüche, wobei der digitale Transport-Stream ein DVB-Transport-Stream ist.

6. Verfahren nach einem der vorangehenden Ansprüche, wobei jeder Empfänger (2), der das digitale Rundfunksignal empfängt, versucht, die Transport-Stream-Pakete des digitalen Transport-Streams zu descrambeln.

## Revendications

1. Procédé permettant de transférer des données d'une tête de réseau (1) vers un nombre de récepteurs (2) au moyen d'un signal de diffusion, chacun desdits récepteurs (2) comprenant un désembrouilleur pour désembrouiller un flux de transport numérique reçu, ledit procédé comprenant le chargement d'une clé unique pour le récepteur respectif (2) dans le désembrouilleur (3) du récepteur respectif (2), la fourniture d'une table (6) de clés uniques avec des adresses correspondantes des récepteurs respectifs (2) à la tête de réseau (1), l'insertion desdites données dans des paquets de transport d'un flux de transport numérique, la sélection d'une clé de ladite table, l'embrouillage desdits paquets de transport en utilisant la clé sélectionnée, la diffusion du flux de transport numérique, la réception du flux de transport numérique sur un ou plusieurs récepteurs (2) et le désembrouillage des paquets de transport embrouillés du flux de transport numérique seulement sur le récepteur (2) ayant la clé unique utilisée pour embrouiller les paquets de transport embrouillés, **caractérisé en ce que** le procédé comprend l'envoi d'un message de la tête de réseau (1) à chaque récepteur (2) vers lequel des données ont besoin d'être transférées, ledit message comprenant une clé unique pour le récepteur respectif (2), et **en ce que** le procédé comprend la fourniture de paquets de données avec une adresse individuelle d'au moins de l'un desdits récepteurs (2) à la tête de réseau (1), dans lequel une clé est sélectionnée à partir de la table (6) de clés uniques sur la tête de réseau (1) selon l'adresse des paquets de données, et les paquets de données sont insérés dans lesdits paquets de transport du flux de transport numérique avant l'embrouillage.

2. Procédé selon la revendication 1, dans lequel pour transférer des paquets de données à deux ou plusieurs récepteurs (2), les paquets de données pour différents récepteurs (2) sont insérés dans différents paquets de transport, chacun desdits paquets de transport étant embrouillé avec une clé unique correspondant à une adresse individuelle des paquets de données correspondants.

3. Procédé selon la revendication 1 ou 2, dans lequel chaque récepteur (2) est adapté pour demander le transfert de données spécifiques de la tête de réseau (1).

4. Procédé selon la revendication 1, 2 ou 3, dans lequel la tête de réseau (1) et les récepteurs (2) sont raccordés à un réseau (5), par exemple l'Internet, dans lequel un ou plusieurs récepteurs (2) demandent le transfert de données vers le réseau (5), dans lequel les données demandées en même temps que l'adresse du (des) récepteur(s) demandant sont fournies à la tête de réseau (1) sous la forme de paquets de données et la tête de réseau (1) transfère les paquets de données vers lesdits un ou plusieurs récepteurs (2) insérés dans des paquets de transport du flux de diffusion numérique.

5. Procédé selon l'une quelconque des revendications précédentes, dans lequel le flux de transport numérique est un flux de transport DVB.

6. Procédé selon l'une quelconque des revendications précédentes, dans lequel chaque récepteur (2) écoutant le signal de diffusion numérique essaie de désembrouiller les paquets de flux de transport du flux de transport numérique.
